# EUROPEAN PATENT SPECIFICATION

(11) **EP 0 518 433 B1**
(45) Date of publication and mention of the grant of the patent: **14.05.1997**
(21) Application number: 92201664.7
(22) Date of filing: 09.06.1992
(51) Int. Cl.: G11B 23/087, G11B 23/40

(54) **Cassette provided with magnetic tape on two coplanar reels**
Kassette mit Magnetband auf zwei koplanaren Spulen
Cassette munie d'une bande magnétique enroulée sur deux bobines coplanaire

(30) Priority: 14.06.1991 EP 91201475
(43) Date of publication of application: 16.12.1992
(73) Proprietor: Philips Electronics N.V., 5621 BA Eindhoven (NL)
(72) Inventor: Doodson, Peter John, NL-5656 AA Eindhoven (NL); Vollmann, Norbert Christian, NL-5656 AA Eindhoven (NL)
(74) Representative: Cuppens, Hubertus Martinus Maria

(56) References cited:
- EP-A- 0 073 010
- EP-A- 0 233 028
- EP-A- 0 323 100
- DE-A- 3 604 261
- US-A- 3 837 599

## Description

The invention relates to a cassette provided with magnetic tape on two coplanar reels, the cassette comprising a housing having two parallel main walls and a plurality of transverse walls, one of said transverse walls forming a front wall having a front opening across which a part of the magnetic tape extends, of which main walls a first main wall has two reel-drive openings and a second main wall is at least substantially imperforate, which cassette further comprises a window, which is arranged on the housing and is situated at least partly on the second main wall, and a label situated between the window and the housing.

A cassette of the type defined in the opening paragraph is described in the Netherlands Patent Application 8903088. The cassette described therein is intended for a digital audio signal, data about the information recorded on the tape being given on the label. The window and the housing of the cassette do not comprise any provisions for the interconnection of the two parts. Therefore, these parts will have to be glued or welded to one another. If this cassette contains prerecorded tape the label need not be removable from the cassette. However, if this cassette contains blank tape the user will wish to note data about the recordings to be made on the label. However, with the prerecorded cassette this is not possible because the label is covered by the window and the window cannot be removed owing to the glued or welded connection.

It is an object of the invention to provide a cassette of the type defined in the opening paragraph, enabling the label to be provided with data by the user. To this end the invention is characterised in that the window can be opened. This enables the window, which covers the label, to be removed to give access to the label.

An embodiment of the cassette in accordance with the invention is characterised in that the cassette comprises fixing means which detachably secure the window to the housing. This enables the window to be removed from the housing in order to provide access to the label.

An further embodiment of the cassette in accordance with the invention is characterised in that the window and the housing are connected to one another by interlocking. In contrast to a force-assisted connection, *i.e.* a connection established in that the parts to be connected exert force onto one another, an interlocked connection, *i.e.* a connection established through the shape of the parts to be connected, does not give rise to stresses in the cassette parts, so that less stringent requirements can be imposed on the parts. Moreover, an interlocked connection precludes fixing problems arising if the stresses decrease as a result of plastic deformations.

Yet a further embodiment of the cassette in accordance with the invention, in which the window and the housing form cassette sections, is characterised in that the fixing means are integrated with at least one of the cassette sections. The fixing means then no longer constitute separate parts but are integral with the housing and the window. This reduces the cost of manufacturing and assembling the cassette.

Yet another embodiment of the cassette in accordance with the invention, in which the second main wall has a recessed area and one of the transverse walls constitutes a rear wall having a further recessed area, the window being L-shaped and engaging the recessed areas, is characterised in that the fixing means comprise a tab which is integral with the window and the second main wall of the housing has an opening in which the tab engages. Thus, the fixing means are not visible when the window is mounted on the housing, so that the appearance of the cassette is not disturbed.

A favourable embodiment of the cassette in accordance with the invention is characterised in that the opening is situated in the second main wall near the rear wall, an inner surface of the rear wall and a free end of the tab have a recess and a projection engaging the recess.

Yet a further embodiment of the cassette in accordance with the invention is characterised in that the fixing means comprise projections and recesses provided on or in edge surfaces of the window and side walls bounding the recessed areas in the second main wall and in the rear wall, the projections engaging the recesses. These projections and recesses may constitute the fixing means either alone or in combination with the tab and the opening, and are neither visible nor palpable when the window is mounted on housing, so that the appearance of the cassette is not disturbed.

Another embodiment of the cassette in accordance with the invention is characterised in that the window is pivotably connected to the housing. The label is now accessible while the window remains connected to the housing so that it cannot be lost.

Still a further embodiment of the cassette in accordance with the invention is characterised in that in that the label is removable. This enables the label to be reversed so that the rear becomes visible or to be replaced by another label, for example when the data specified on the label no longer corresponds to the information on the magnetic tape.

A further embodiment of the cassette in accordance with the invention is characterised in that the label has a hole at the location of the tab of the window. The tab of the window can be inserted through this hole, so that the label will be positioned correctly between the housing and the window.

Still another embodiment of the cassette in accordance with the invention is characterised in that the label has at least one blank side. If desired, data about the recordings on the magnetic tape can be noted on the blank side by the user.

Yet a further embodiment of the cassette in accordance with the invention, which cassette comprises two reels containing the spools, is characterised in that the housing has at least one transparent window which is fixedly connected to the housing, through which window a part of one of the reels is visible. Thus, the user can see how much magnetic tape is contained on the reel, which may be useful in order to determine the length of tape still available for a further recording.

The invention will now be described in more detail with reference to the drawings. In the drawings:
Figure 1 is a first view of the cassette in accordance with the invention;
Figure 2 is a second view of the cassette in accordance with the invention;
Figure 3 is a sectional view of the cassette, taken at the location of the fixing means;
Figure 4 shows a window of the cassette;
Figure 5 shows a label of the cassette,
Figure 6 shows the cassette without label and window,
Figure 7 is a sectional view of a cassette in accordance with the invention, comprising a hinge between the window and the housing, and
Figure 8 shows the cassette of Fig. 7 with the window in the open position.

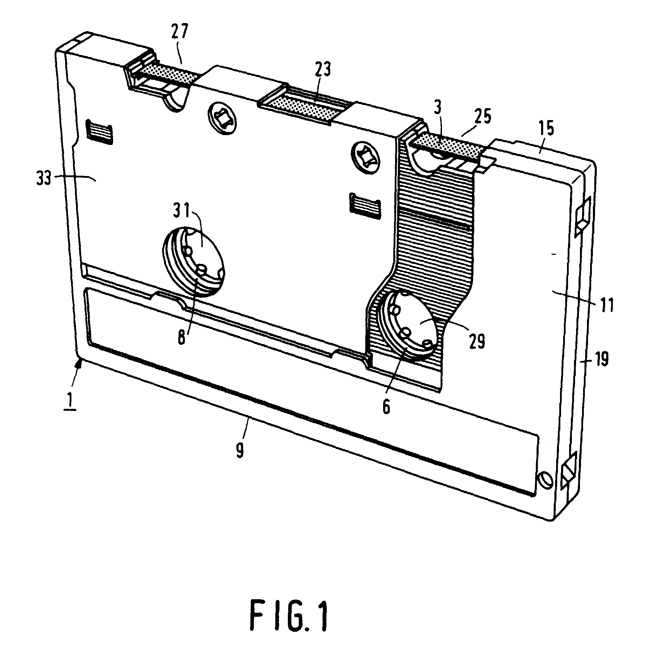

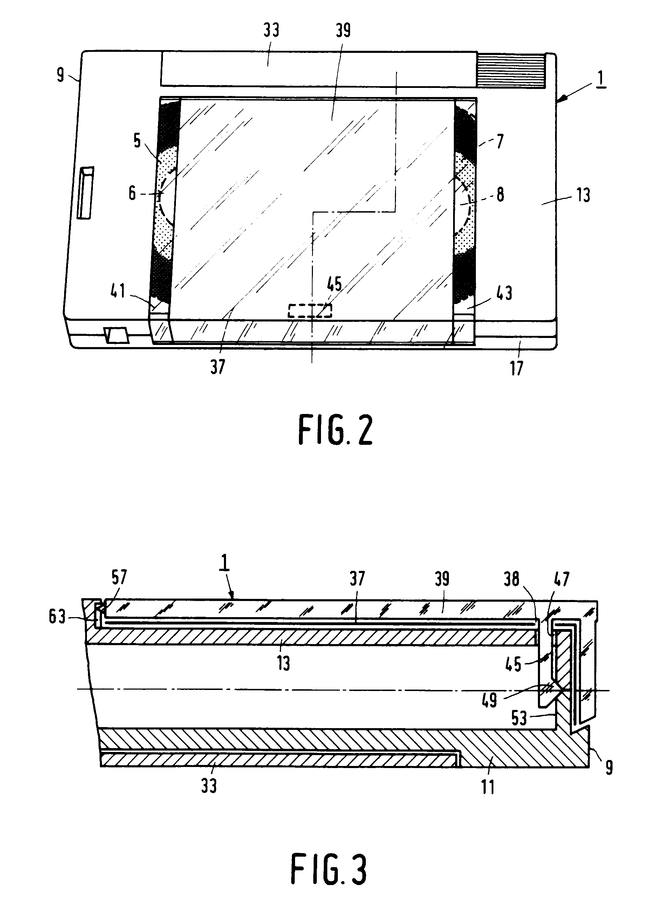

Figs. 1 and 2 show an embodiment of the cassette 1 in accordance with the invention, provided with magnetic tape 3 on two coplanar reels 5 and 7. The cassette 1 has a housing 9 comprising a first and a second main wall 11, 13 and four transverse walls 15, 17, 19, 21 (see also Fig. 5), one of these transverse walls constituting a front wall 15 and another one of these transverse walls constitutes a rear wall 17. The front wall 15 has a front opening 23, for the passage of a magnetic head, and two pressure-roller openings 25 and 27, along which a part of the magnetic tape 3 extends. The housing 9 accommodates two reels 6 and 8 containing the spools 5 and 7. The first main wall 11 has two reel-drive openings 29 and 31 and the second main wall 13 is imperforate. Figure is a view at the first main wall 11 of the cassette. The cassette 1 has a sliding cover 33 for closing the openings 23, 25, 27, 29 and 31 in the housing 9. The sliding cover 33 is shown in the open position in which the openings are exposed. Fig. 2 is a view at the second main wall 13 of the cassette. The second main wall 13 and the rear wall 17 have a recessed area 35 (see Fig. 5) in which a label 37 and a window 39 are situated. Two transparent windows 41 and 43 adjacent the label 37 show the reels 5 and 7 and the spools 6 and 8.

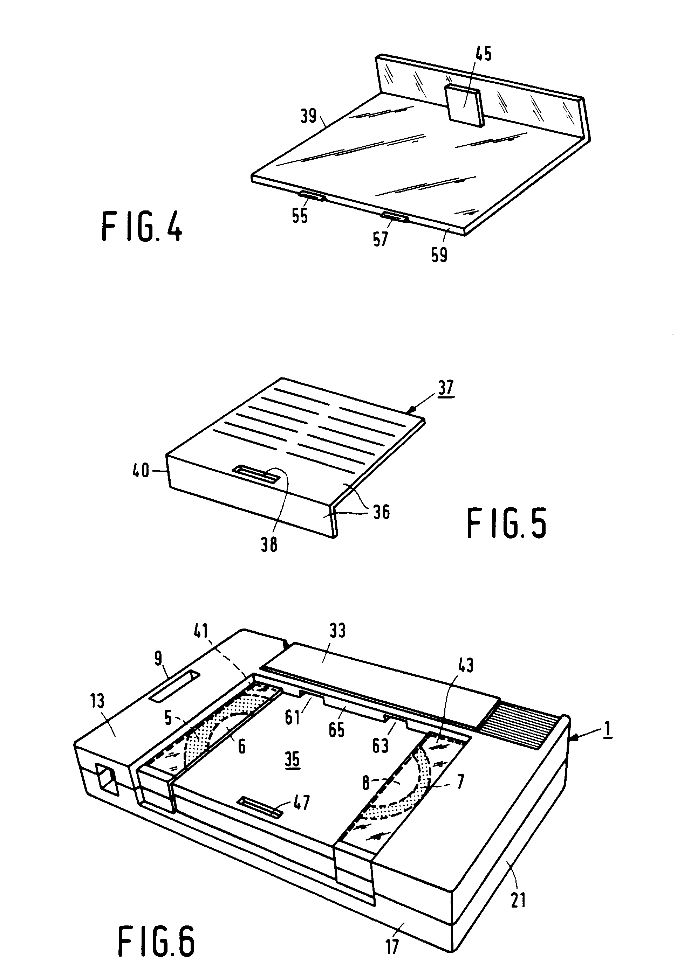

The window 39 is detachable from the housing 9 and is secured to the housing by fixing means, see Fig. 3. The fixing means comprise a tab 45 which is integral with the window 39 and which extends through a hole 38 in the label 37 and an opening 47 in the second main wall 13. The tab 45 is connected to the window 39 with one end, the free end having a projection 49 which engages in a recess 51 in the inner surface 53 of the rear wall 17. The rear wall 17 and the window 39 may be formed with further openings at the location of the projection 49, enabling the projection 49 to be pressed out of the recess 51 from the outside so that the window can be removed with less effort. The fixing means further comprise two projections 55 and 57 on an edge surface 59 of the window 39 and two recesses 61 and 63 in a side wall 65 bounding the recessed area 35 in the second main wall 13 (see also Figs. 4 and 5).

The window 39 is shown separately in Fig. 4. The window 39 is L-shaped and transparent. The window 39 covers the label 37 and the two windows 41 and 43. The label 37 is shown separately in Fig. 5. The label has a hole 38 to accommodate the tab 45 of the window 39. One side 36 of the label is blank and can be used for noting data about the information recorded on the magnetic tape. The other side may be provided with graphics or a logo. By folding the flap 40 of the label 37 to the other side the label can be inserted into the cassette with its other side facing the window, so that at option one side or the other side is visible. Fig. 6 shows the cassette 1 without window and without label. The recessed area 35 is deepest at the location of the label. The windows 41 and 43 bound the label area.

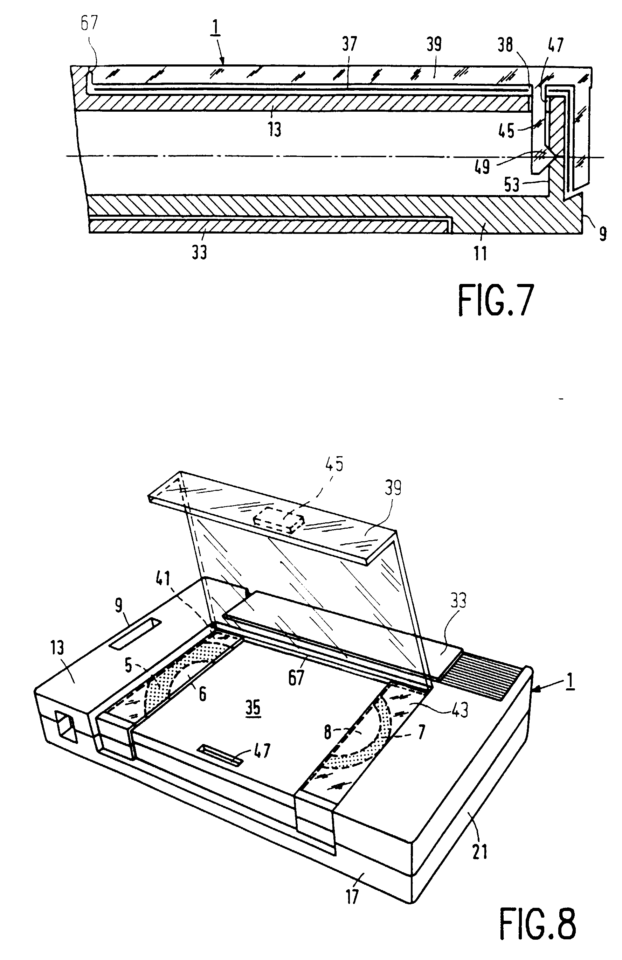

Figure 7 shows another embodiment of the cassette 1 in which the window 39 is connected to the housing 9 *via* a flexible hinge 67. Consequently, the window 39 cannot come off the housing 9 and always assumes the correct position when it is closed. Figure 8 shows the cassette 1 with the window 39 in an open position.

Although in the foregoing the invention has been described with reference to the drawings, it is to be noted that the invention is by no means limited to the embodiments shown in the drawings. The invention also pertains to all embodiments deviating from those in the drawings within the scope defined by the Claims and utilising the basic idea of the invention, which is that a window of a housing of a cassette, which window covers a label, can be opened to give access to a label. For example, in deviation from what is shown in the drawings, it is possible to clamp the window onto the housing of the cassette or to secure the window to the housing by separate fixing means, for example screws. Moreover, it is possible to arrange the tab and the projections on the window at other locations than shown and to form the opening in another part of the housing, for example in the rear wall. Instead of a flexible hinge it is possible to use another hinge and to connect the window to the housing at another location, for example near the rear of the cassette.

## Claims

1. A cassette (1) provided with magnetic tape (3) on two coplanar reels (5,7), the cassette comprising a housing having two parallel main walls (11,13) and a plurality of transverse walls (15,17,19,21), one of said transverse walls forming a front wall (15) having a front opening (23) across which a part of the magnetic tape extends, of which main walls a first main wall has two reel-drive openings (29,31) and a second main wall is substantially imperforate, which cassette further comprises a window (39), which is arranged on the housing and is situated at least partly on the second main wall, and a label (37) situated between the window and the housing, characterised in that the window can be opened.

2. A cassette as claimed in Claim 1, characterised in that the cassette comprises fixing means (45,47) which detachably secure the window to the housing.

3. A cassette as claimed in Claim 2, characterised in that the window and the housing are connected to each other by interlocking.

4. A cassette as claimed in Claim 3, in which the window and the housing form cassette sections, characterised in that the fixing means are integrated with at least one of the cassette sections.

5. A cassette as claimed in Claim 4, in which the second main wall has a recessed area (35) and one of the transverse walls constitutes a rear wall having a further recessed area (35), the window being L-shaped and engaging the recessed areas, characterised in that the fixing means comprise a tab (45) which is integral with the window and the second main wall of the housing has an opening (47) in which the tab engages.

6. A cassette as claimed in Claim 5, characterised in that the opening is situated in the second main wall near the rear wall, an inner surface of the rear wall and a free end of the tab have a recess (51) and a projection (49) engaging the recess.

7. A cassette as claimed in Claim 4, 5 or 6, characterised in that the fixing means comprise projections (49,55,57) and recesses (51,61,63) provided on or in edge surfaces 65 of the window and side walls bounding the recessed areas in the second main wall and in the rear wall, the projections engaging the recesses.

8. A cassette as claimed in Claim 1, characterised in that the window is pivotably connected to the housing.

9. A cassette as claimed in any one of the preceding Claims, characterised in that the label is removable.

10. A cassette as claimed in Claim 9, characterised in that the label has a hole (38) at the location of the tab of the window.

11. A cassette as claimed in Claim 9 or 10, characterised in that the label has at least one blank side (36).

12. A cassette as claimed in any of the preceding Claims, which cassette comprises two reels containing the spools, characterised in that the housing has at least one transparent window (41,43) which is fixedly connected to the housing, through which window a part of one of the reels is visible.

## Patentansprüche

1. Kassette (1) mit einem Magnetband (2) auf zwei koplanaren Spulen (5, 7) mit einem Gehäuse mit zwei parallelen Hauptwänden (11, 13) und mehreren Querwänden (15, 17, 19, 21), von denen eine die Vorderwand (15) bildet, in der sich eine Frontöffnung (23) befindet, an der sich ein Teil des Magnetbandes entlang erstreckt, wobei von diesen Hauptwänden eine erste Hauptwand mit zwei Spulenantriebsöffnungen (29, 31) versehen ist und eine zweite Hauptwand im wesentlichen geschlossen ist, wobei diese Kassette weiterhin ein Fenster (39) aufweist, das auf dem Gehäuse vorhanden ist und sich wenigstens teilweise auf der zweiten Hauptwand befindet, sowie ein Etikett (37), das sich zwischen dem Fenster und dem Gehäuse befindet.

2. Kassette nach Anspruch 1, dadurch gekennzeichnet, daß die Kassette Befestigungsmittel (45, 47) aufweist, die das Fenster entfernbar am Gehäuse befestigen.

3. Kassette nach Anspruch 2, dadurch gekennzeichnet, daß das Fenster und das Gehäuse formschlüssig aneinander befestigt sind.

4. Kassette nach Anspruch 3, wobei das Fenster und das Gehäuse Kassettenteile bilden, dadurch gekennzeichnet, daß die Befestigungsmittel mit wenigstens einm der Kassettenteile integriert sind.

5. Kassette nach Anspruch 4, wobei die zweite Hauptwand eine Ausnehmung (35) hat und eine der Querwände eine Rückwand mildet mit einer weiteren Ausnehmung (35), wobei das Fenster L-förmig ist und mit den Ausnehmungen zusammenarbeitet, dadurch gekennzeichnet, daß die Befestigungsmittel eine Zunge (45) aufweisen, die mit dem Fenster ein integraler Teil bildet und daß die zweite Wand des Gehäuses eine Öffnung (47) aufweist, in welche die Zunge hineinpaßt.

6. Kassette nach Anspruch 5, dadurch gekennzeichnet, daß die Öffnung in der zweiten hauptwand in der Nähe der Rückwand vorgesehen ist, wobei eine innere Fläche der Rückwand und ein freies Ende der Zunge eine Ausnehmung (51) und einen Vorsprung (44) haben, der mit der Ausnehmung zusammenarbeitet.

7. Kassette nach Anspruch 4, 5 oder 6, dadurch gekennzeichnet, daß die Befestigungsmittel Vorsprünge (49, 55, 57) aufweisen, die an oder in Seitenflächen (65) des Fensters und Seitenwänden der Vertiefungen in der zweiten Hauptwand und in der Rückwand vorgesehen sind, wobei die Vorsprünge sich in den Ausnehmungen befinden.

8. Kassette nach Anspruch 1, dadurch gekennzeichnet, daß das Fenster schwenkbar an dem Gehäuse befestigt ist.

9. Kassette nach einem der vorstehenden Ansprüche, dadurch gekennzeichnet, daß das Etikett entfernbar ist.

10. Kassette nach Anspruch 9, dadurch gekennzeichnet, daß das Etikett ein Loch (38) aufweist an der Stelle der Zunge des Fensters.

11. Kassette nach Anspruch 9 oder 10, dadurch gekennzeichnet, daß das Etikett wenigstens eine unbedruckte Seite (36) aufweist.

12. Kassette nach einem der vorstehenden Ansprüche, die zwei Haspeln mit Spulen aufweist, dadurch gekennzeichnet, daß das Gehäuse wenigstens ein transparentes Fenster (41, 43) aufweist, das mit dem Gehäuse fest verbunden ist, wobei durch dieses Fenster ein Teil einer der Spulen sichtbar ist.

## Revendications

1. Cassette (1) pourvue d'une bande magnétique (3) enroulée sur deux bobines coplanaires (5, 7), la cassette comprenant un boîtier comportant deux parois principales parallèles (11, 13) et une pluralité de parois transversales (15, 17, 19, 21), une desdites parois transversales formant une paroi avant (15) présentant une ouverture avant (23) en travers de laquelle s'étend une partie de la bande magnétique, une première paroi principale présentant deux ouvertures d'entraînement de bobine (29, 31) et une seconde paroi principale étant en substance imperforée, laquelle cassette comprend en outre une fenêtre (39) qui est disposée sur le boîtier et est située au moins en partie sur la seconde paroi principale, et une étiquette (37) située entre la fenêtre et le boîtier, caractérisée en ce que la fenêtre peut être ouverte.

2. Cassette suivant la revendication 1, caractérisée en ce que la cassette comprend des moyens de fixation (45, 47) qui fixent la fenêtre de manière détachable au boîtier.

3. Cassette suivant la revendication 2, caractérisée en ce que la fenêtre et le boîtier sont reliés l'un à l'autre par un verrouillage réciproque.

4. Cassette suivant la revendication 3, dans laquelle la fenêtre et le boîtier forment des sections de cassette, caractérisée en ce que les moyens de fixation sont intégrés à au moins une des sections de la cassette.

5. Cassette suivant la revendication 4, dans laquelle la seconde paroi principale présente une zone en retrait (35) et une des parois transversales constitue une paroi arrière présentant une autre zone en retrait (35), la fenêtre étant en L et s'engageant dans les zones en retrait, caractérisée en ce que les moyens de fixation comprennent une patte (45) qui fait partie intégrante de la fenêtre et la seconde paroi principale du boîtier présente une ouverture (47) dans laquelle la patte s'engage.

6. Cassette suivant la revendication 5, caractérisée en ce que l'ouverture est située dans la seconde paroi principale à proximité de la paroi arrière, une surface interne de la paroi arrière et une extrémité libre de la patte présentent un creux (51) et une saillie (49) s'engageant dans le creux.

7. Cassette suivant la revendication 4, 5 ou 6, caractérisée en ce que les moyens de fixation comprennent des saillies (49, 55, 57) et des creux (51, 61, 63) prévus sur ou dans des surfaces marginales (65) de la fenêtre et des parois latérales bornant les zones en retrait dans la seconde paroi principale et dans la paroi arrière, les saillies s'engageant dans les creux.

8. Cassette suivant la revendication 1, caractérisée en ce que la fenêtre est reliée à pivotement au boîtier.

9. Cassette suivant l'une quelconque des revendications précédentes, caractérisée en ce que l'étiquette peut être enlevée.

10. Cassette suivant la revendication 9, caractérisée en ce que l'étiquette présente une ouverture (38) à l'endroit de la patte de la fenêtre.

11. Cassette suivant la revendication 9 ou 10, caractérisée en ce que l'étiquette a au moins un côté vierge (36).

12. Cassette suivant l'une quelconque des revendications précédentes, laquelle cassette comprend deux bobines portant les rouleaux de bande, caractérisée en ce que le boîtier comporte au moins une fenêtre transparente (41, 43) qui est reliée rigidement au boîtier et à travers laquelle une partie d'une des bobines est visible.
